# EUROPEAN PATENT APPLICATION

(11) **EP 4 850 519 A1**
(43) Date of publication of application: **09.12.2026**
(21) Application number: 26183099.6
(22) Date of filing: 04.06.2026
(51) Int. Cl.: A01D 46/30, A01D 46/22

(54) **FRUIT AND VEGETABLE HARVESTING APPARATUS AND FARM FACILITY**

(30) Priority: 05.06.2025 JP 2025094124; 05.06.2025 JP 2025094125; 05.06.2025 JP 2025094126
(71) Applicant: Yanmar Holdings Co., Ltd., Osaka (JP)
(72) Inventor: KITANO, Keita, Osaka-shi (JP); YOKOUE, Toshiyuki, Osaka-shi (JP); TSUBOI, Kae, Osaka-shi (JP); KUGA, Toru, Osaka-shi (JP); KAMIMORI, Takuya, Osaka-shi (JP)
(74) Representative: Sekiguchi, Kazuya

(57) **Abstract**

A fruit and vegetable harvesting apparatus is a fruit and vegetable harvesting apparatus 1 that harvests, stores, and carries fruit and vegetables comprising: a fruit and vegetable harvester 2 that harvests fruit and vegetables; and a storage portion that stores fruit and vegetables harvested by the fruit and vegetable harvester 2, wherein the fruit and vegetable harvester 2 is provided with a fruit and vegetable moving mechanism (robot arm 23) that moves fruit and vegetables into the storage portion in a state in which the fruit and vegetables are held by the fruit and vegetable moving mechanism.

## Description

### TECHNICAL FIELD

The present invention relates to a fruit and vegetable harvesting apparatus suitable for harvesting fruit and vegetables planted and cultivated in rows, and a farm facility in which fruit and vegetables planted and cultivated in rows are harvested by the fruit and vegetable harvesting apparatus that travels in an inter-row space.

### BACKGROUND ART

In the related art, a crop harvester that conveys harvested root vegetables by a conveyor and collects the root vegetables on a net pallet is known (for example, refer to Patent Document 1).

The crop harvester described in Patent Document 1 has a configuration in which root vegetables in a field are dug by a digging blade provided at a tip end portion of the harvester, conveyed rearward by a conveyor, and then loaded on a net pallet to be collected.

### PRIOR ART DOCUMENT

### PATENT DOCUMENT

Patent Document 1: Japanese Unexamined Patent Application Publication No. Hei 9-107776

### SUMMARY OF INVENTION

### TECHNICAL PROBLEM

However, in the above-described conventional crop harvester, since the loading onto the net pallet is carried out by the conveyor, although the crops such as potatoes that are strong against the impact of dropping are less likely to cause a problem when they are dropped from the conveyor onto the net pallet to be loaded, the delicate crops such as tomatoes that are relatively weak against the impact are liable to be crushed or damaged by the dropping from the conveyor.

The present invention has been made in view of such circumstances, and an object thereof is to provide a fruit and vegetable harvesting apparatus capable of harvesting fruit and vegetables requiring delicate handling without damaging the fruit and vegetables.

### SOLUTION TO PROBLEM

In order to solve the above-described problems, a fruit and vegetable harvesting apparatus according to the present invention is a fruit and vegetable harvesting apparatus that harvests, stores, and carries fruit and vegetables comprising: a fruit and vegetable harvester that harvests fruit and vegetables; and a storage portion that stores fruit and vegetables harvested by the fruit and vegetable harvester, wherein the fruit and vegetable harvester is provided with a fruit and vegetable moving mechanism that moves fruit and vegetables into the storage portion in a state in which the fruit and vegetables are held by the fruit and vegetable moving mechanism.

The fruit and vegetable harvesting apparatus described above may be configured such that the storage portion is provided with a storage box mounting portion on which a storage box can be mounted, and the storage box is mounted on the storage box mounting portion in a state in which the storage box is inclined.

The fruit and vegetable harvesting apparatus described above may be configured such that the storage box mounting portion includes an inclination angle variable mechanism that changes an inclination angle of the storage box.

The fruit and vegetable harvesting apparatus described above may be configured such that the storage box mounting portion accommodates a plurality of the storage boxes, each having an opening on at least one side surface thereof, in a stacked state, and the arm portion loads fruit and vegetables into each of the storage boxes through the opening.

The fruit and vegetable harvesting apparatus described above may be configured such that the fruit and vegetable harvester includes a control unit that ends the holding of fruit and vegetables at the opening thereby storing the fruit and vegetables in the storage box.

The fruit and vegetable harvesting apparatus described above may be configured such that the control unit stores a single layer of fruit and vegetables in the storage box.

In the fruit and vegetable harvesting apparatus described above, the fruit and vegetable harvesting apparatus may comprise a carrying cart that carries fruit and vegetables harvested by the fruit and vegetable harvester; and a connecting device that can connect the fruit and vegetable harvester to the carrying cart.

The fruit and vegetable harvesting apparatus described above may be configured such that the carrying cart includes a control unit that maintains a predetermined position in which fruit and vegetables are unloaded in a state in which the carrying cart is separated from the fruit and vegetable harvester by the connecting device.

The fruit and vegetable harvesting apparatus described above may be configured such that the connecting device connects and disconnects a connecting body provided on one of the fruit and vegetable harvester and the carrying cart to and from a connected body provided on the other of the fruit and vegetable harvester and the carrying cart.

The fruit and vegetable harvesting apparatus described above may be configured such that one of the fruit and vegetable harvester and the carrying cart is provided with a proximity sensor that senses that the other of the fruit and vegetable harvester and the carrying cart approaches a position at which the fruit and vegetable harvester and the carrying cart can be connected to each other, and the fruit and vegetable harvester and the carrying cart are connected to each other when the proximity sensor senses that the fruit and vegetable harvester and the carrying cart approach to a position at which the fruit and vegetable harvester and the carrying cart can be connected to each other.

The fruit and vegetable harvesting apparatus described above may be configured such that the connecting device comprises a marker provided at a connection release position between the fruit and vegetable harvester and the carrying cart; and a marker detection sensor that is provided in one of the fruit and vegetable harvester and the carrying cart and detects the marker, and when the marker detection sensor detects the marker, connection of the connecting device is released.

In the above-described fruit and vegetable harvesting apparatus, the fruit and vegetable harvesting apparatus may comprises a control unit that, when the carrying cart is full during an operation of harvesting fruit and vegetables, moves to a proximal end portion in an inter-row space of a cultivation bed undergoing the operation of harvesting fruit and vegetables, and releases connection between the fruit and vegetable harvester and the carrying cart to leave the carrying cart at the proximal end portion in the inter-row space.

A farm facility comprising the fruit and vegetable harvesting apparatus described above may be configured such that the farm facility has a cultivation bed having a plurality of rows, the fruit and vegetable harvesting apparatus comprises a fruit and vegetable harvester that harvests fruit and vegetables while traveling in an inter-row space between the rows of the cultivation bed, and a carrying cart that carries fruit and vegetables harvested by the fruit and vegetable harvester, a plurality of the carrying carts are respectively provided for each inter-row space or for every several inter-row spaces, and the farm facility is provided with a passage in each inter-row space through which the fruit and vegetable harvester and the carrying cart can travel.

The farm facility described above may be configured such that the cultivation bed is provided with an inter-row traveling passage for the fruit and vegetable harvester to move between the inter-row spaces, the inter-row traveling passage being provided further outside a distal end of the inter-row space.

### ADVANTAGEOUS EFFECTS OF INVENTION

As described above, according to the present invention, since the fruit and vegetable harvester for harvesting the fruit and vegetables is provided with the fruit and vegetable harvesting mechanism for moving the fruit and vegetables into the storage portion in a state in which the fruit and vegetables are held by the fruit and vegetable harvesting mechanism, even the fruit and vegetables requiring delicate handling can be directly stored into the fruit and vegetable storage box without being damaged by being conveyed by the conveyor or the like.

### BRIEF DESCRIPTION OF DRAWINGS

FIG. 1 is a side view schematically showing the overall configuration of a fruit and vegetable harvesting apparatus according to the present embodiment.
FIG. 2 is a plan view schematically showing the overall configuration of the fruit and vegetable harvesting apparatus according to the present embodiment.
FIG. 3 is a partial plan view schematically showing the overall configuration of a farm facility according to the present embodiment.
FIG. 4 is a partial perspective view showing an end effector of a robot arm in a fruit and vegetable harvester of the fruit and vegetable harvesting apparatus according to the present embodiment.
FIG. 5A and FIG. 5B are a view from above and a view from below each showing a connection state of a connecting device of the fruit and vegetable harvesting apparatus according to the present embodiment.
FIG. 6A and FIG. 6B are a view from above and a view from below each showing a connection release state of the connecting device of the fruit and vegetable harvesting apparatus according to the present embodiment.
FIG. 7 is a partial schematic side view showing the other embodiment of the fruit and vegetable harvesting apparatus according to the present embodiment.
FIG. 8A and FIG. 8B are partial schematic side views each showing still the other embodiment of the fruit and vegetable harvesting apparatus according to the present embodiment.
FIG. 9A to FIG. 9D are process diagrams showing a process of loading a fruit and vegetable storage box onto a carrying cart of the fruit and vegetable harvesting apparatus according to the present embodiment.
FIG. 10A to FIG. 10G are process diagrams showing a harvesting process of fruit and vegetables using the fruit and vegetable harvesting apparatus in the farm facility according to the present embodiment.
FIG. 11 is a flow chart for explaining the control when fruit and vegetables are harvested by the fruit and vegetable harvester of the fruit and vegetable harvesting apparatus in the present embodiment.
FIG. 12 is a flow chart for explaining the control when the fruit and vegetables harvested by the fruit and vegetable harvester of the fruit and vegetable harvesting apparatus are stored in the fruit and vegetable storage box in the present embodiment.
FIG. 13 is a perspective view showing the other embodiment of the fruit and vegetable storage box used in the fruit and vegetable harvesting apparatus according to the present embodiment.
FIG. 14 is a flow chart for explaining the control when the connection between the fruit and vegetable harvester and the carrying cart is released in the present embodiment.

### DESCRIPTION OF EMBODIMENTS

Hereinafter, an embodiment of the present invention will be described with reference to the drawings.

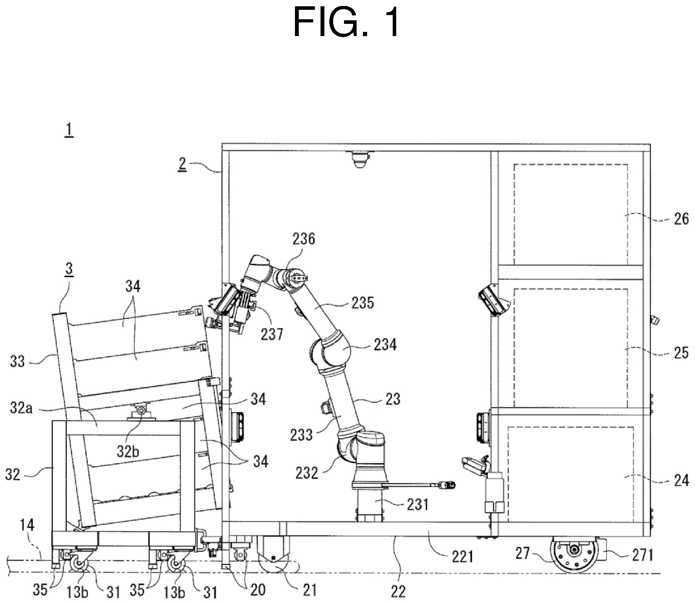

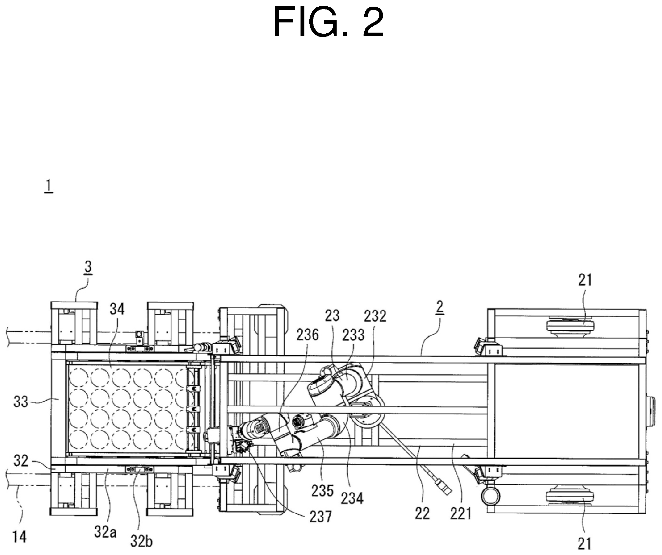

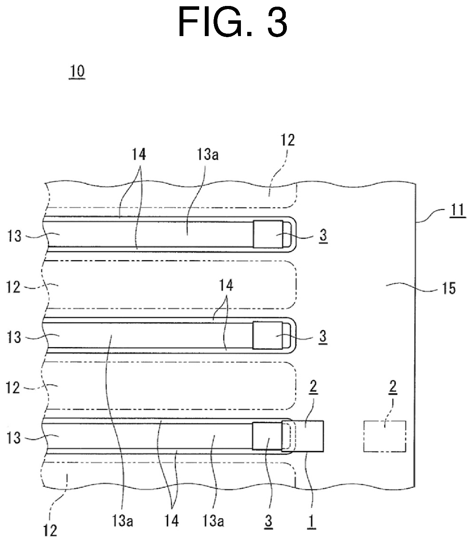

FIG. 1 and FIG. 2 show a fruit and vegetable harvesting apparatus 1 used in a farm facility 10 according to an embodiment of the present invention, and FIG. 3 shows a partial plan view of the farm facility 10.

The farm facility 10 includes a cultivation bed 11 and a fruit and vegetable harvesting apparatus 1 that harvest, store, and transport fruit and vegetables while traveling on the cultivation bed 11.

The cultivation bed 11 includes a plurality of rows 12 on which fruits and vegetables are cultivated, and inter-row spaces 13. The inter-row space 13 is formed to have a width through which the fruit and vegetable harvesting apparatus 1 can travel, and is leveled so that the fruit and vegetable harvesting apparatus 1 can stably travel. A pair of hot water pipes 14 through which hot water flows is provided in the inter-row space 13 to heat the cultivation bed 11 and adjust the cultivation bed 11 to a predetermined cultivation environment. The hot water pipe 14 is also used as a rail when the fruit and vegetable harvesting apparatus 1 travels, and thus, the inter-row space 13 constitutes a passage 13a through which the fruit and vegetable harvesting apparatus 1 travels. A cargo collection passage 15 in which a sufficient space for cargo collection is secured is provided to be connected to the proximal end portions of the respective inter-row spaces 13.

The fruit and vegetable harvesting apparatus 1 is provided with a fruit and vegetable harvester 2 and a carrying cart 3, and the fruit and vegetable harvester 2 and the carrying cart 3 can be connected to each other by a connecting device 4.

The fruit and vegetable harvester 2 is provided with a frame 221 along the longitudinal direction of a harvesting cart 22 that is provided with wheels 21 and driving wheels 27, and a robot arm 23 is provided on the frame 221.

The robot arm 23 includes a first link 233 provided on a base 231 fixed to the frame 221 via a first joint 232, a second link 235 provided at a distal end of the first link 233 via a second joint 234, and an end effector 237 provided at a distal end of the second link 235 via a third joint 236.

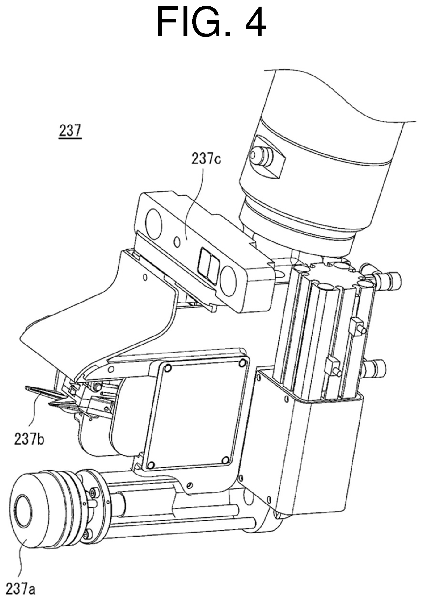

As shown in FIG. 4, the end effector 237 includes an actuator 237a for sucking and holding a fruit or vegetable such as a tomato at the time of harvesting and a cutter 237b for cutting the stem of the fruit or vegetable, and is configured to confirm the position of the fruit or vegetable by a sensor 237c such as an image sensor, hold the fruit or vegetable by the actuator 237a, and cut the stem of the held fruit or vegetable by the cutters 237b.

Each of the first joint 232, the second joint 234, and the third joint 236 is rotatable so that the end effector 237 can be activated in each direction of up and down, left and right, and front and rear including rotation, and the first link 233 and the second link 235 are extendable and contractible from a reference length. As used herein, the term "up" of the "up and down" refers to the higher side and the term "down" refers to the lower side in the height direction, the term "left" of the "left and right" refers to the left side and the term "right" refers to the right side with respect to the traveling direction in which the fruit and vegetable harvester 2 connected to the carrying cart 3 travels toward the carrying cart 3 side, and the term "front" of the "front and rear" refers to the front and the term "rear" refers to the rear in the traveling direction in which the fruit and vegetable harvester 2 connected to the carrying cart 3 travels toward the carrying cart 3 side.

The base 231 is fixed to the frame 221, but may be slidable on the frame 221. In this case, it is possible to further widen the activity range of the robot arm 23.

The harvesting cart 22 is provided with a compressor 24, a battery 25, and a control device 26 in addition to the robot arm 23. The compressor 24 is used when the actuator 247a is operated. The battery 25 is used as a power source of a motor 271 that operates the entire robot arm 23 and drives the driving wheel 27 of the harvesting cart 22, and is used for traveling of the fruit and vegetable harvester 2. The control device 26 performs overall control of the fruit and vegetable harvester 2. The wheel 21 and the driving wheel 27 of the harvesting cart 22 are provided on the harvesting cart 22 so as to be positioned further outside the hot water pipe 14 provided on the passage 13a of the inter-row space 13, and a guide roller 20 rotating in contact with the hot water pipe 14 is provided in the vicinity of the wheel 21 so that the wheel 21 and the driving wheel 27 do not come into contact with the hot water pipe 14 when the harvesting cart 22 travels along the hot water pipe 14.

The carrying cart 3 is provided with a carrying basket 33 swingable with respect to a support cart 32 provided with wheels 31, and a plurality of fruit and vegetable storage boxes 34 are stacked and loaded on the carrying basket 33.

The wheel 31 is provided on the support cart 32 so as to be positioned further outside of the width of the hot water pipe 14 provided on the passage 13a of the inter-row space 13, and a guide roller 35 rotating in contact with the hot water pipe 14 is provided on the support cart 32 so that the wheel 31 does not come into contact with the hot water pipe 14 when the support cart 32 travels along the hot water pipe 14.

The support cart 32 is opened at the rear of the side to which the fruit and vegetable harvester 2 is connected, and a support shaft 32b is provided on a horizontal frame 32a on both right and left sides.

The carrying basket 33 is supported between the support shafts 32b so as to be swingable to front and rear. Similarly to the support cart 32, the carrying basket 33 is opened at the rear of the side to which the fruit and vegetable harvester 2 is connected, and a size of the carrying basket 33 is adjusted so that a plurality of fruit and vegetable storage boxes 34 can be stacked and loaded in the carrying basket 33 from the rear side. That is, in a state where five fruit and vegetable storage boxes 34 are stacked and loaded on the carrying basket 33, the bottom surface, the front side surface, and both the left and right side surfaces of the stacked fruit and vegetable storage boxes 34 are supported by the frame of the carrying basket 33, and the rear side surface is opened.

The fruit and vegetable storage box 34 is opened on a rear side surface and a top surface, and is composed of a bottom surface, both right and left side surfaces and a front side surface, and can be stacked by placing, on the upper side portions of both right and left side surfaces and the front side surface of the fruit and vegetable storage box 34, the peripheral edge portion of the bottom surface of the other fruit and vegetable storage box 34. In this stacked state, the top surface and the rear side surface of the uppermost fruit and vegetable storage box 34 are opened, but the rear side surfaces of the fruit and vegetable storage boxes 34 stacked below the uppermost fruit and vegetable storage box 34 are opened. Therefore, the fruit and vegetable harvester 2 is configured to store the harvested fruit and vegetables in each fruit and vegetable storage box 34 via the robot arm 23 from the opened portion of the rear side surface of each fruit and vegetable storage box 34. At this time, the robot arm 23 may access the inside of each fruit and vegetable storage box 34 from the opened portion of the rear side surface of each fruit and vegetable storage box 34 and store the fruit and vegetables in order from the innermost portion. However, when the end effector 237 is too large, there may be a case in which the robot arm 23 cannot access the inside of the fruit and vegetable storage box from the opened portion. In this case, the fruit and vegetables are to be placed at a position immediately after entering the fruit and vegetable storage box 34 from the opened portion. Even in such a case, in order to store sufficient fruit and vegetables inside the fruit and vegetable storage box 34, the carrying basket 33 may be rotated about the support shaft 32b so that the opened portion is high and becomes lower toward the innermost portion, that is, the front of the fruit and vegetable storage box 34 is low and the rear of the fruit and vegetable storage box 34 is high. In this case, when the fruit and vegetables are placed immediately after entering the fruit and vegetable storage box 34, the fruit and vegetables roll in the fruit and vegetable storage box 34 and move to the innermost portion, and the fruit and vegetables are sequentially stored from the innermost portion of the fruit and vegetable storage box 34. At this time, the inclination angle of the fruit and vegetable storage box 34 is set to 6 degrees to 12 degrees, preferably 8 degrees to 10 degrees. For example, when the fruit and vegetables are relatively hard such as orange, the inclination angle is preferably set to 8 degrees to 12 degrees, and when the fruit and vegetables are relatively soft such as tomato, the inclination angle is preferably set to 6 degrees to 10 degrees.

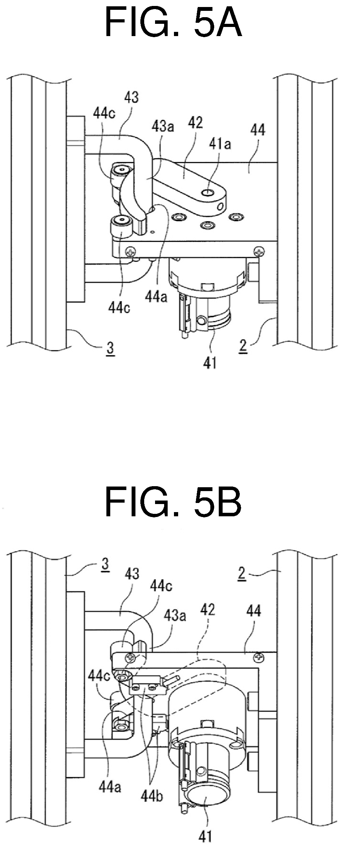

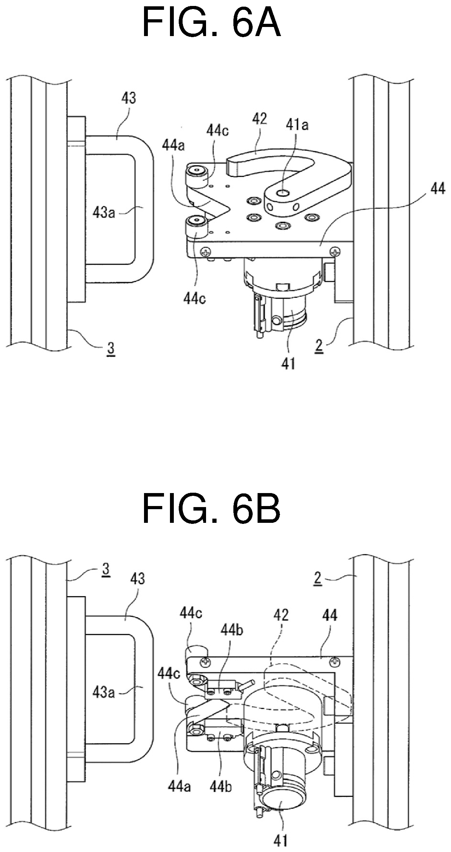

As shown in FIG. 5 and FIG. 6, the connecting device 4 is composed of a hook 42 provided on the harvesting cart 22 of the fruit and vegetable harvester 2 and pivoted by a rotary actuator 41, and a handle 43 provided on the support cart 32 of the carrying cart 3. The fruit and vegetable harvester 2 and the carrying cart 3 can be connected and disconnected when the hook 42 and handle 43 are engaged to and disengaged from each other.

In this configuration, the rotary actuator 41 is fixed to an L-shaped bracket 44 provided so as to protrude from the front end portion of the lower center of the harvesting cart 22 of the fruit and vegetable harvester 2. That is, the rotary actuator 41 is in contact with and fixed to the lower surface of the bracket 44 so that a pivot shaft 41a penetrates the bracket 44 and protrudes from the upper surface. The hook 42 is fixed to the pivot shaft 41a, and thereby, the hook 42 pivots on the upper surface of the bracket 44. The bracket 44 is provided with a V-shaped groove 44a at the center of the side facing the carrying cart 3. When the hook 42 is pivoted with the handle 43 fitted in the V-shaped groove 44a, the hook 42 is engaged with the handle 43 fitted in the V-shaped groove 44a to secure the handle 43 in the V-shaped groove 44a.

The handle 43 is provided at the rear end portion of the lower center of the support cart 32 of the carrying cart 3, and is fixed such that a shaft portion 43a that is to be engaged with the hook 42 is directed in the up- and-down direction. Thus, when the fruit and vegetable harvester 2 and the carrying cart 3 approach each other, the shaft portion 43a of the handle 43 is fitted into the V-shaped groove 44a of the bracket 44 fixed to the harvesting cart 22 of the fruit and vegetable harvester 2.

Whether or not the shaft portion 43a of the handle 43 is fitted into the V-shaped groove 44a of the bracket 44 is confirmed by a sensor 44b provided on the lower surface side of the V-shaped groove 44a of the bracket 44, and after it is confirmed by the sensor 44b that the shaft portion 43a of the handle 43 is fitted into the V-shaped groove 44a of the bracket 44, the hook 42 pivots and engages with the shaft portion 43a of the handle 43. In order to stabilize the hook 42 in a state in which the fruit and vegetable harvester 2 and the carrying cart 3 are connected to each other by this engagement, a support guide 44c for supporting the engagement state of the hook 42 is provided on the upper surface on both sides of the entrance of the V-shaped groove 44a of the bracket 44. As a result, even when force acts in a direction in which the fruit and vegetable harvester 2 and the carrying cart 3 are separated from the connected state, the hook 42 is maintained in the engagement state at a total of three points of the pivot shaft 41a and the pair of support guides 44c.

When releasing the engagement state between the hook 42 and the handle 43 to release the connection between the fruit and vegetable harvester 2 and the carrying cart 3, the hook 42 may be pivoted by the pivot of the rotary actuator 41 to release the engagement state between the hook 42 and the handle 43.

The connection of the fruit and vegetable harvester 2 and the carrying cart 3 by the connecting device 4 is performed by previously providing the carrying cart 3 at the proximal end portion of the passage 13a formed in the inter-row space 13 and making the fruit and vegetable harvester 2 approach the carrying cart 3 from the cargo collection passage 15. After the fruit and vegetable harvester 2 and the carrying cart 3 are connected to constitute the fruit and vegetable harvesting apparatus 1, the fruit and vegetable harvesting apparatus 1 travels back and forth along the passage 13a in the inter-row space 13 to perform harvesting work. After harvesting, the connection is released when the carrying cart 3 returns to the position of the proximal end portion of the passage 13a in the inter-row space 13 so that the carrying cart 3 does not further move to the side of the cargo collection passage 15 from the state in which the carrying cart 3 is returned to the proximal end portion of the passage 13a in the inter-row space 13. For example, when the carrying cart 3 is located at the proximal end portion of the passage 13a in the inter-row space 13, the turning portion of the hot water pipe 14 is positioned under the fruit and vegetable harvester 2 connected to the carrying cart 3. Therefore, in a state in which the position of the turning portion of the hot water pipe 14 is taught to the guide roller 20 provided on the fruit and vegetable harvester 2, the control device 26 may control the connection between the fruit and vegetable harvester 2 and the carrying cart 3 such that, when the guide roller 20 is moved to the rear side of this position, the connection between the fruit and vegetable harvester 2 and the carrying cart 3 is automatically released. In this case, the connection between the fruit and vegetable harvester 2 and the carrying cart 3 can be released at the same position at all times, and the carrying cart 3 can be retained at the proximal end portion of the inter-row space 13 at all times. This connection release is performed when the position of the turning portion of the hot water pipe 14 is detected by the guide roller 20 provided in the fruit and vegetable harvester 2. However, a dedicated marker 16 serving as a trigger for the connection release may be provided at the proximal end portion of the passage 13a, and when a marker detection sensor 28 provided in the fruit and vegetable harvester 2 faces the marker 16, the connection is released. In this case, the marker detection sensor 28 is provided in the fruit and vegetable harvester 2 to perform the connection release, but may be provided in the carrying cart 3 to perform the connection release.

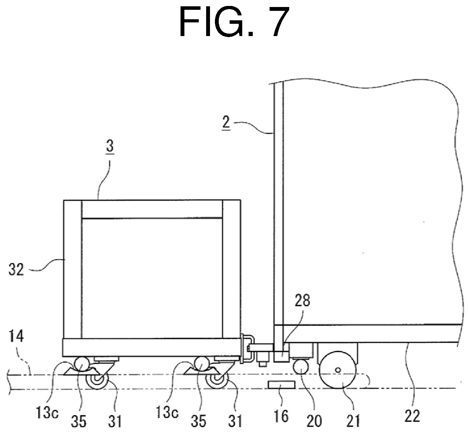

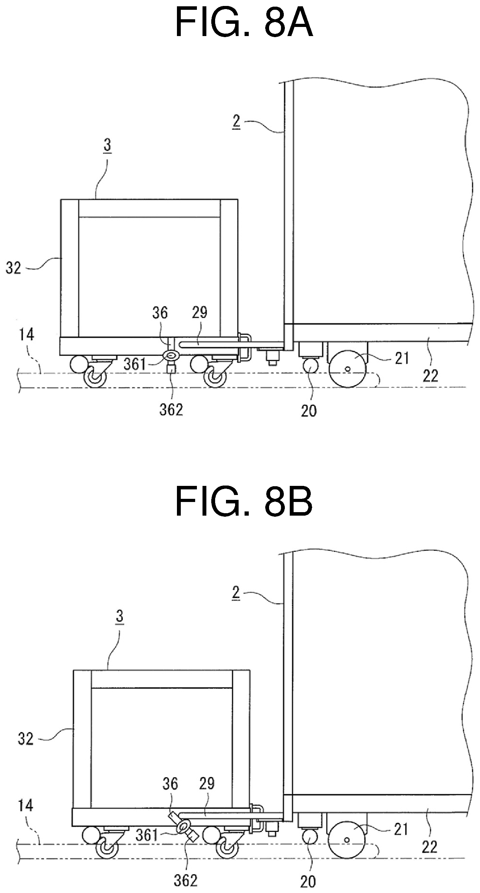

In addition, when the fruit and vegetable harvester 2 and the carrying cart 3 are connected to and disconnected from each other by the connecting device 4, the fruit and vegetable harvester 2 travels by the driving wheel 27, but the carrying cart 3 has to be fixed so as not to move. Even after the fruit and vegetable harvester 2 and the carrying cart 3 are disconnected from each other, the carrying cart 3 has to be fixed since there is collection work for collecting the fruit and vegetable storage box 34 from the carrying cart 3. Therefore, the carrying cart 3 has to be fixed so as not to move at the proximal end portion of the inter-row space 13 except when the carrying cart 3 is connected to the fruit and vegetable harvester 2 by the connecting device 4 and moves. Therefore, the wheel 31 or the guide roller 35 of the carrying cart 3 may be configured to be lockable and used as a stopper for fixing the carrying cart 3 at a predetermined position so as not to move. In this case, the locking of the wheel 31 or the guide roller 35 may be performed by the control device 26 or may be manually performed. Further, in addition to the locking of the wheel 31 or the guide roller 35, a concave portion 13b into which the wheel 31 of the carrying cart 3 is fitted at the time of connection and disconnection may be provided in the proximal end portion of the inter-row space 13 to stop the movement of the carrying cart 3. The concave portion 13b can be overcome by a small power, but it is sufficient to have a fixing power of a degree of a slight resistance so that the carrying cart 3 does not move at the time of connection and disconnection by the connecting device 4, and therefore, the height is set as necessary. Although the concave portion 13b in which the wheel 31 of the carrying cart 3 is fitted is provided at the proximal end portion of the inter-row space 13, as shown in FIG. 7, the concave portion 13c in which the guide roller 35 of the carrying cart 3 is fitted may be provided in the hot water pipe 14 at the proximal end portion of the inter-row space 13 with which the hot water pipe 14 comes into contact. Further, as shown in FIG. 8, the carrying cart 3 may be provided with a stand 36 that is rotatable about a pin 361 and in which a rubber portion 362 at the lower end thereof is normally brought into contact with the surface of the hot water pipe 14 by its own weight so that the fixed cart 2 can be held at a fixed position. When the carrying cart 3 and the fruit and vegetable harvester 2 are connected to each other, a projection 29 provided on the fruit and vegetable harvester 2 pushes an upper portion than the pin 361 of the stand 36, whereby the stand 36 is rotated about the pin 361, the contact between the rubber portion 362 of the stand 36 and the hot water pipe 14 is released and the fixed cart 3 is no longer held at the fixed position. When the connection between the fruit and vegetable harvester 2 and the carrying cart 3 by the connecting device 4 is released, the pressing of the rubber portion stand 36 by the projection 29 is also released, the stand 36 is returned to the standing state by its own weight, and the rubber portion 362 of the stand 36 is brought into contact with the surface of the hot water pipe 14 and the fixed cart 3 is held at the fixed position again.

The connection by the connecting device 4 is not limited to the connection by the hook 42 and the handle 43, and may be a knuckle type automatic coupler or a contact type automatic coupler used for connection of a train or the like.

Further, the connection by the connecting device 4 is not limited to the connection by the hook 42 and the handle 43 according to the present embodiment, or the mechanical connection such as the knuckle type automatic coupler or the contact type automatic coupler used in the connection of the train or the like described above, but may be a connection by an electromagnet. That is, like the hook 42 and the handle 43 of the connecting device 4, a ferromagnetic body is provided at one of positions where the fruit and vegetable harvester 2 and the carrying cart 3 face each other, and an electromagnet that generates a magnetic force by energization is provided at the other position. In the case of the present embodiment, the configuration can be simplified by providing an electromagnet in the fruit and vegetable harvester 2 on which the battery 25 is mounted. In this connecting device 4, when the electromagnet is energized, the electromagnet and the ferromagnetic body attract each other, and the fruit and vegetable harvester 2 and the carrying cart 3 are connected to each other. In the case of this connecting device 4 provided with the electromagnet, even when a cumulative control error occurs due to repeated use (for example, when the position of the hot water pipe 14 shifts due to an earthquake or the like and the stop position of the carrying cart 3 shifts), the fruit and vegetable harvester 2 and the carrying cart 3 can be connected by the electromagnet and the ferromagnetic body attracting each other by the energization of the electromagnet. Therefore, the frequency of periodic maintenance for correcting the cumulative control error can be reduced. However, since the connection state is maintained by the magnetic force between the electromagnet and the ferromagnetic body, it is difficult to secure the connection strength as compared with the mechanical connection. Therefore, the connection by the electromagnet and the mechanical connection structure described above may be used in combination.

In the fruit and vegetable harvesting apparatus 1 configured as described above, the fruit and vegetable harvester 2 and the carrying cart 3 can be connected and disconnected by the connecting device 4. Therefore, when the carrying cart 3 is filled with the harvested fruit and vegetables in the harvesting work, only the carrying cart 3 is disconnected from the fruit and vegetable harvester 2 and is left at a predetermined place, and the fruit and vegetable harvester 2 is connected to a new carrying cart 3, and the harvesting work can be continued. Finally, since the fruit and vegetable storage boxes 34 can be collected at once from the plurality of carrying carts 3 that have been left, efficient collection work can be performed.

Next, a process of harvesting fruit and vegetables using the fruit and vegetable harvesting apparatus 1 in the farm facility 10 will be described.

First, when the harvesting is started, a carrying cart 3 is provided at the proximal end portion of each inter-row space 13. The fruit and vegetable storage boxes 34 are stacked and loaded on the carrying basket 33 of each carrying cart 3.

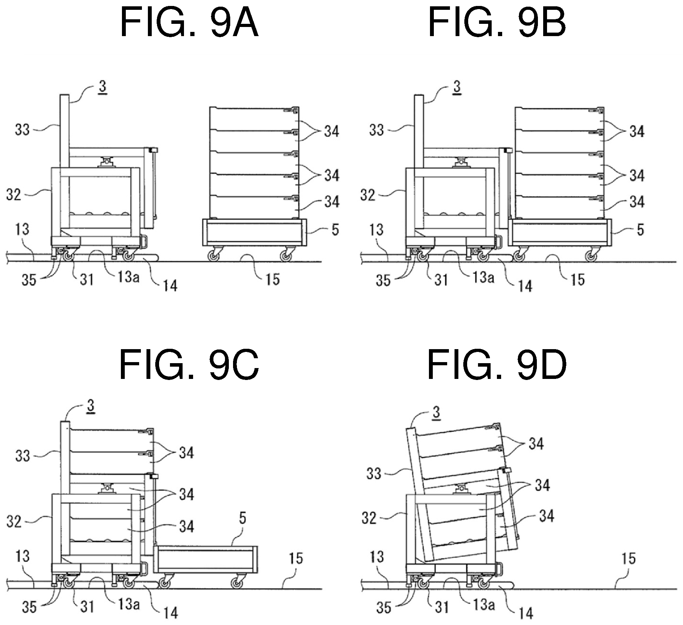

As shown in FIG. 9, this work is performed by carrying the fruit and vegetable storage box 34 placed on the cart 5 into the carrying basket 33 of each carrying cart 3 from the cargo collection passage 15. At this time, the carrying of the fruit and vegetable storage box 34 into the carrying basket 33 by the cart 5 may be automatically performed by the cart 5 that can be automatically controlled and operated, or may be manually performed.

After the fruit and vegetable storage boxes 34 are loaded on the carrying basket 33 of each carrying cart 3, the carrying basket 33 is rotated about the support shaft 32b of the support cart 32 to be inclined, and the fruit and vegetable storage box 34 is positioned so that the opened portion of the fruit and vegetable storage box 34 is high and the inside of the fruit and vegetable storage box 34 becomes lower toward the innermost portion, that is, the front of the fruit and vegetable storage box 34 is low and the rear thereof is high. This positioning may also be performed by moving the support shaft 32b by automatic control operation, or may be performed manually.

When the preparation up to this point is completed, the fruit and vegetable harvester 2 is connected to the carrying cart 3, and the harvesting work of the fruit and vegetables is started for each row 12.

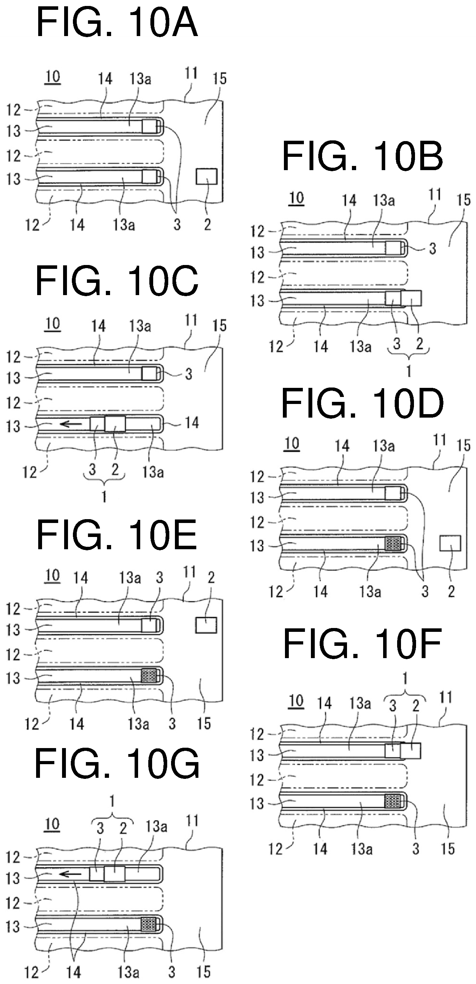

As shown in FIG. 10A and FIG. 10B, first, the fruit and vegetable harvester 2 approaches the carrying cart 3 in the inter-row space 13 where harvesting is first performed from the cargo collection passage 15, and the fruit and vegetable harvester 2 and the carrying cart 3 are connected.

This connection may be automatically performed by an automatic control operation to move the fruit and vegetable harvester 2 to the carrying cart 3 provided at the proximal end portion of each inter-row space 13, or may be manually performed.

When the connection between the fruit and vegetable harvester 2 and the carrying cart 3 by the connecting device 4 is completed and the fruit and vegetable harvesting apparatus 1 is constituted, as shown in FIG. 10C, the fruit and vegetable harvesting apparatus 1 harvests the fruit and vegetables while traveling along the hot water pipe 14 in the passage 13a in the inter-row space 13.

The harvesting of the fruit and vegetables is performed by the control device 26 of the fruit and vegetable harvester 2 as follows.

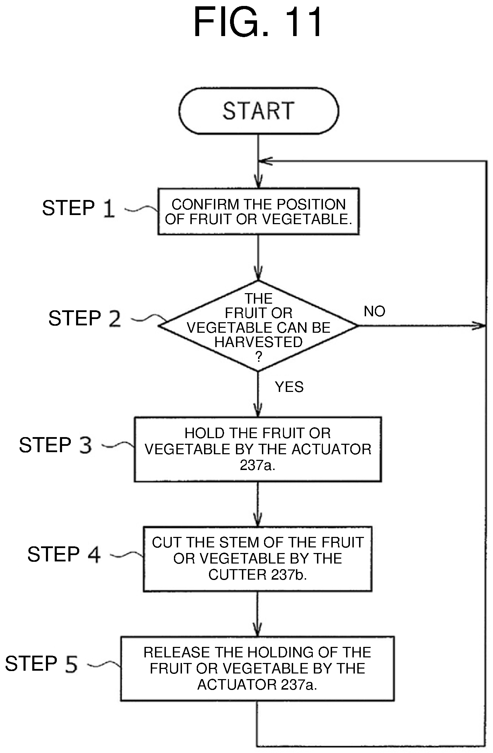

As shown in FIG. 11, first, the position of the fruit or vegetable that is the crop planted in each row 12 is specified by an image sensor (not shown) provided in the fruit and vegetable harvester 2 (Step 1).

When the position of the fruit or vegetable is specified, the end effector 237 of the robot arm 23 approaches the fruit or vegetable, the size and the color of this fruit or vegetable are recognized by the sensor 237c, and whether or not the fruit or vegetable can be harvested and the ripeness thereof are determined (Step 2).

When it is determined that the fruit or vegetable can not be harvested, the end effector 237 approaches the position of the next fruit or vegetable, and the same determination is performed (Step 1).

When it is determined that the fruit or vegetable can be harvested, this fruit or vegetable is held by the actuator 237a (Step 3), the stem of the fruit or vegetable is cut by the cutter 237b (Step 4), and the fruit or vegetable is harvested from the seedling of the crop.

The harvested fruit or vegetable is moved by the robot arm 23 to the opened portion of the rear side surface of the fruit and vegetable storage box 34 loaded on the carrying basket 33 of the carrying cart 3, and after the harvested fruit or vegetable is released and stored in the fruit and vegetable storage box 34 (Step 5), the next fruit or vegetable is harvested (Step 1). The harvesting is stopped by the other control of the control device 26.

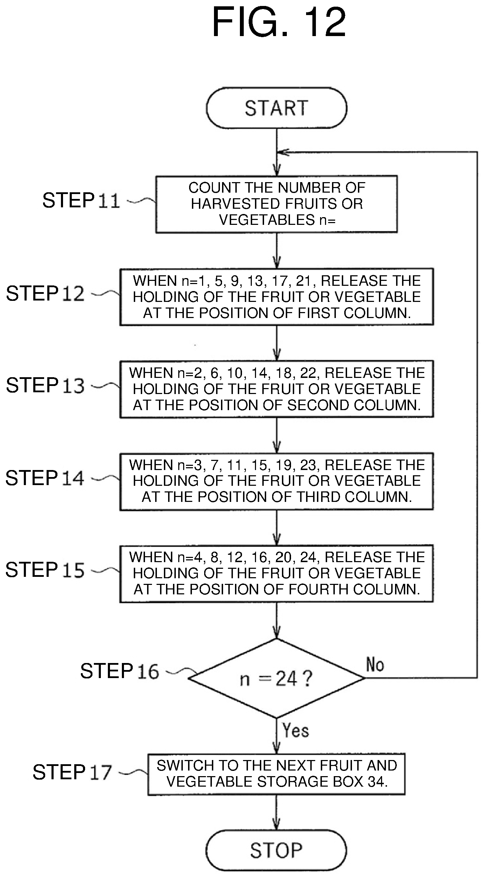

At this time, when each fruit and vegetable storage box 34 is assumed to store the fruits and vegetables in, for example, four columns and six rows, the fruits or vegetables are stored in order from the positions of the four columns. That is, as shown in FIG. 12, the fruits or vegetables harvested by the robot arm 23 are counted (step 11), and the robot arm 23 that has harvested the first fruit or vegetable moves this fruit or vegetable to the position of the first column of the opened rear portion of the uppermost fruit and vegetable storage box 34 of the loaded fruit and vegetable storage boxes 34, releases the holding of the fruit or vegetable by the actuator 237a immediately after entering the fruit and vegetable storage box 34 from the opened portion, and stores this fruit or vegetable in the fruit and vegetable storage box 34 (step 12). Then, since the fruit and vegetable storage box 34 is positioned such that the front of the fruit and vegetable storage box 34 is low and the rear thereof is high, the fruit or vegetable rolls in the fruit and vegetable storage box 34 and moves to the innermost portion, and is stored at the position of the first column and the first row.

The holding of the second fruit or vegetable is released at the position of the second column of the opened rear portion of the uppermost fruit and vegetable storage box 34 and this second fruit or vegetable is stored at the position of the second column and the first row (Step 13). The holding of the third fruit or vegetable is released at the position of the third column of the opened rear portion of the uppermost fruit and vegetable storage box 34 and this third fruit or vegetable is stored at the position of the third column and the first row (Step 14). Similarly, the holding of the fourth fruit or vegetable is released at the position of the fourth column of the opened rear portion of the uppermost fruit and vegetable storage box 34 and this fourth fruit or vegetable is stored at the position of the fourth column and the first row (Step 15), and then, the holding of the fifth fruit or vegetable is released at the position of the first column of the opened rear portion of the uppermost fruit and vegetable storage box 34 and this fifth fruit or vegetable is stored at the position of the first column and the second row (Step 12), and so forth. Thereafter, when the storing into the first fruit and vegetable storage box 34 is completed by performing the storing of 24 pieces of fruit and vegetables in the four columns and six rows in the same manner, the storing into the first fruit and vegetable storage box 34 is stopped (Step 16), and the fruit and vegetable storage boxes 34 are switched so that the next fruit or vegetable is similarly stored in the fruit and vegetable storage box 34 of the second level from the top (Step 17).

After the fruits or vegetables are similarly stored in the fruit and vegetable storage box 34 of the second level, the fruits or vegetables are similarly stored in the fruit and vegetable storage boxes 34 of the third and subsequent levels, and the process is performed until all the fruit and vegetable storage boxes 34 become full. Regarding whether or not all the fruit and vegetable storage boxes 34 are full, it is determined that all the fruit and vegetable storage boxes 34 are full when the number of times of the determination of step 17 described above counted by the control device 26 is the same number as the loading number of the fruit and vegetable storage boxes 34, that is, "5" in the present embodiment.

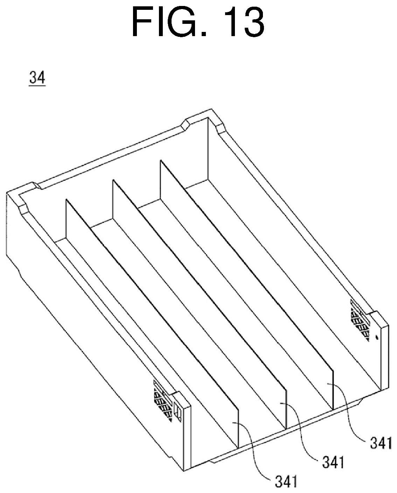

In addition, after the holding of the fruit or vegetable is released, the fruit or vegetable rolls on the same column where the holding is released and moves to the inside, but in some cases, the fruit or vegetable may move to the other column. However, even when the fruit or vegetable moves to the other column, the fruit or vegetable does not roll from the position of the first column to the position of the fourth column. In the final level of the storing, the distance of rolling and moving to the inside after releasing the holding is shortened, and thus the fruits or vegetables are finally accommodated in four columns and six rows in the fruit and vegetable storage box 34. In order to reliably store the fruits and vegetables in four columns and six rows, as shown in FIG. 13, the fruit and vegetable storage box 34 may be provided with a guide 341 that partitions between the columns so that the fruit or vegetable rolls in the same column. Further, the control by the control device 26 may be changed such that when the fruit or vegetable is stored in the last several rows, the storage position is confirmed by the sensor 237c and the fruit or vegetable is stored in an empty column.

While the fruits or vegetables thus harvested by the robot arm 23 are successively stored in the fruit and vegetable storage box 34, the fruit and vegetable harvesting apparatus 1 travels along the hot water pipe 14 in the passage 13a in the inter-row space 13. This harvesting may be performed for the fruit and vegetables in the rows 12 on both sides of the inter-row space 13, or may be performed for the fruit and vegetables in the row 12 on one side of the inter-row space 13.

In addition, the harvesting may be performed in both a forward path in which the fruit and vegetable harvesting apparatus 1 travels forward in the inter-row space 13 and a backward path in which the fruit and vegetable harvesting apparatus 1 moves rearward in the inter-row space 13, or may be performed in only one of the forward path and the backward path.

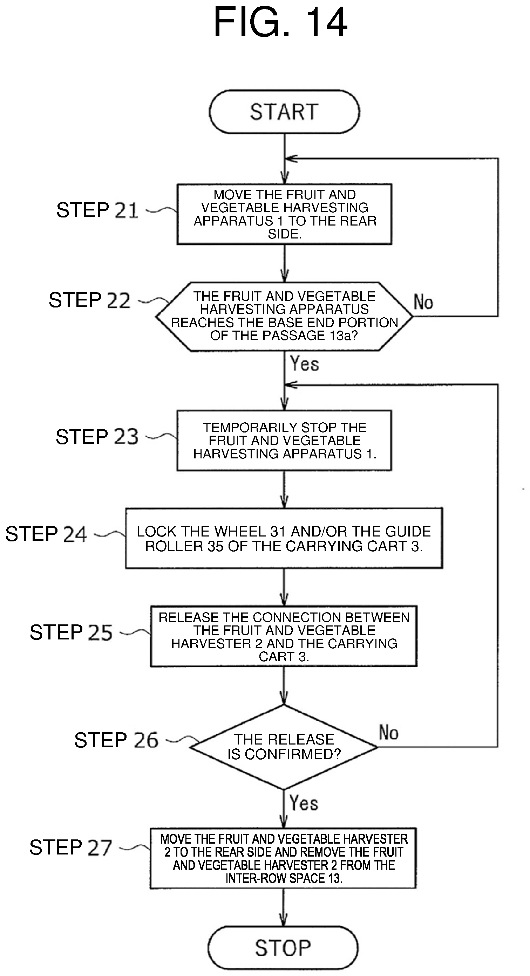

Finally, when the fruit and vegetable harvesting apparatus 1 moves back and forth in the inter-row space 13 to harvest the fruit and vegetables and returns to the starting point, as shown in FIG. 10D, the connection between the fruit and vegetable harvester 2 and the carrying cart 3 by the connecting device 4 is released. Even when all the fruit and vegetable storage boxes 34 become full in the middle of harvesting, the fruit and vegetable harvesting apparatus 1 suspends the harvesting in the middle and is returned to the starting point, and the connection between the fruit and vegetable harvester 2 and the carrying cart 3 by the connecting device 4 is released. At this time, in order to release the connection, as shown in FIG. 14, when the fruit and vegetable harvesting apparatus 1 moves rearward to return to the starting point (Step 21), it is confirmed whether or not the fruit and vegetable harvesting apparatus 1 has reached the proximal end portion of the passage 13a in the inter-row space 13 (Step 22). When the fruit and vegetable harvesting apparatus 1 has not reached the proximal end portion, the fruit and vegetable harvesting apparatus 1 continues to travel rearward. When the fruit and vegetable harvesting apparatus 1 has reached the proximal end portion, the fruit and vegetable harvesting apparatus 1 is temporarily stopped (Step 23), and the wheels 31 and/or the guide rollers 35 of the carrying cart 3 are locked to fix the carrying cart 3 so as not to move (Step 24). Then, the hook 42 is pivoted by the pivot of the rotary actuator 41 of the connecting device 4 to release the engagement state between the hook 42 and the handle 43, thereby the connection between the fruit and vegetable harvester 2 and the carrying cart 3 is released (Step 25). When the release of the connection can be confirmed by the position of the hook 42 (Step 26), only the fruit and vegetable harvester 2 that has been disconnected moves further rearward and is removed from the inter-row space 13 (Step 27). Since the wheel 31 is fitted into the concave portion 13b and the locked state of the wheel 31 and/or the guide roller 35 is maintained at the same time, the carrying cart 3 is maintained to be fixed at the proximal end portion of the inter-row space 13. However, since the carrying cart 3 needs to be fixed when the fruit and vegetable storage box 34 is carried out from the carrying cart 3, the fixed state is maintained as it is.

As shown in FIG. 10E and FIG. 10F, the removed fruit and vegetable harvester 2 moves to the adjacent inter-row space 13, and is connected to the carrying cart 3 provided in this new inter-row space 13 by the connecting device 4, whereby the fruit and vegetable harvesting apparatus 1 is constituted. Thereafter, similarly, as shown in FIG. 10G, the fruit and vegetable harvesting apparatus 1 harvests the fruit and vegetables while traveling along the hot water pipe 14 in the passage 13a in the inter-row space 13.

On the other hand, after harvesting, the carrying cart 3 is disconnected and left at proximal end portion in each inter-row space 13, and the fruit and vegetables are stored in the respective fruit and vegetable storage boxes 34 in the carrying cart 3. The fruit and vegetable storage boxes 34 loaded on the carrying basket 33 of the carrying cart 3 are carried out by the cart 5.

This carrying-out work may be performed at once after harvesting of all of the fruit and vegetables is finished and the carrying cart 3 is left at the proximal end portion of each of the inter-row spaces 13 in a state in which the fruit and vegetables are stored in the respective fruit and vegetable storage boxes 34, or may be performed for each inter-row space 13 such that, while the harvesting work is performed in one inter-row space 13, the cart 5 carries out the fruit and vegetable storage boxes 34 in which the fruit and vegetables harvested from the other inter-row space 13 is stored. This carrying-out may be performed by automatic control similarly to the carrying-in, or may be performed manually.

As described above, since the farm facility 10 includes the passage 13a in which the fruit and vegetable harvester 2 and the carrying cart 3 can travel, it is possible to efficiently perform the harvesting work of the fruit and vegetables using the fruit and vegetable harvesting apparatus 1 configured by connecting the fruit and vegetable harvester 2 and the carrying cart 3. In addition, since the harvested fruit and vegetables can be collectively left at the proximal end portion of the inter-row space 13 in a state of being stored in the carrying cart 3, the subsequent cargo collection can be easily performed.

In the present embodiment, the carrying carts 3 are provided in all the inter-row spaces 13, and the fruit and vegetable storage boxes 34 are loaded on the carrying basket 33 of each of the carrying carts 3. However, since the harvesting work is performed for each row 12, when the carrying cart 3 of the inter-row space 13 in which the harvesting work is first started is prepared for harvesting, the carrying cart 3 of the other inter-row space 13 may be prepared while the harvesting work is performed by the carrying cart 3 of the first inter-row space 13.

The present invention may be implemented in other various forms without departing from the spirit or essential characteristics thereof. Therefore, the above-described embodiments are merely examples in all respects, and should not be interpreted in a limited manner. The scope of the present invention is defined by the appended claims and is not limited by the description of the specification. Further, all modifications and changes belonging to the scope of the claims are within the scope of the present invention.

### REFERENCE SIGNS LIST

1 fruit and vegetable harvesting apparatus
10 farm facility
11 cultivation bed
12 row
13 inter-row space
13a passage
13b concave portion (stopper)
13c concave portion (stopper)
15 cargo collection passage (inter-row traveling passage)
16 marker
2 fruit and vegetable harvester
23 robot arm (fruit and vegetable moving mechanism)
26 control device (control unit)
28 marker detection sensor
3 carrying cart (storage portion)
32b support shaft (inclination angle variable mechanism)
33 carrying basket (storage box mounting portion)
34 fruit and vegetable storage box
36 stand (stopper)
4 connecting device
41 rotary actuator
42 hook (connecting body)
43 handle (connected body)
44b sensor (proximity sensor)

## Claims

1. A fruit and vegetable harvesting apparatus that harvests, stores, and carries fruit and vegetables comprising:
a fruit and vegetable harvester that harvests fruit and vegetables; and
a storage portion that stores fruit and vegetables harvested by the fruit and vegetable harvester,
wherein the fruit and vegetable harvester is provided with a fruit and vegetable moving mechanism that moves fruit and vegetables into the storage portion in a state in which the fruit and vegetables are held by the fruit and vegetable moving mechanism.

2. The fruit and vegetable harvesting apparatus according to claim 1, wherein
the storage portion is provided with a storage box mounting portion on which a storage box can be mounted, and
the storage box mounting portion is provided such that the storage box in a state of being inclined is mounted thereon.

3. The fruit and vegetable harvesting apparatus according to claim 2, wherein the storage box mounting portion includes an inclination angle variable mechanism that changes an inclination angle of the storage box.

4. The fruit and vegetable harvesting apparatus according to claim 3, wherein
the storage box mounting portion accommodates a plurality of the storage boxes, each having an opening on at least one side surface thereof, in a stacked state, and
the arm portion loads fruit and vegetables into each of the storage boxes through the opening.

5. The fruit and vegetable harvesting apparatus according to claim 4, wherein the fruit and vegetable harvester includes a control unit that ends the holding of fruit and vegetables at the opening thereby storing the fruit and vegetables in the storage box.

6. The fruit and vegetable harvesting apparatus according to any one of claims 1 to 5, wherein the control unit stores a single layer of fruit and vegetables in the storage box.

7. The fruit and vegetable harvesting apparatus according to claim 1, comprising:
a carrying cart that carries fruit or vegetables harvested by the fruit and vegetable harvester; and
a connecting device that can connect the fruit and vegetable harvester to the carrying cart.

8. The fruit and vegetable harvesting apparatus according to claim 7, wherein the carrying cart includes a control unit that maintains a predetermined position in which fruit and vegetables are unloaded in a state in which the carrying cart is separated from the fruit and vegetable harvester by the connecting device.

9. The fruit and vegetable harvesting apparatus according to claim 7, wherein the connecting device connects and disconnects a connecting body provided on one of the fruit and vegetable harvester and the carrying cart to and from a connected body provided on the other of the fruit and vegetable harvester and the carrying cart.

10. The fruit and vegetable harvesting apparatus according to claim 7, wherein
one of the fruit and vegetable harvester and the carrying cart is provided with a proximity sensor that senses that the other of the fruit and vegetable harvester and the carrying cart approaches a position at which the fruit and vegetable harvester and the carrying cart can be connected to each other, and
the fruit and vegetable harvester and the carrying cart are connected to each other when the proximity sensor senses that the fruit and vegetable harvester and the carrying cart approach to a position at which the fruit and vegetable harvester and the carrying cart can be connected to each other.

11. The fruit and vegetable harvesting apparatus according to claim 7, wherein
the connecting device comprises
a marker provided at a connection release position between the fruit and vegetable harvester and the carrying cart; and
a marker detection sensor that is provided in one of the fruit and vegetable harvester and the carrying cart and detects the marker, and
when the marker detection sensor detects the marker, connection of the connecting device is released.

12. The fruit and vegetable harvesting apparatus according to claim 7, comprising a control unit that, when the carrying cart is full during an operation of harvesting fruit and vegetables, moves to a proximal end portion in an inter-row space of a cultivation bed undergoing the operation of harvesting fruit and vegetables, and releases connection between the fruit and vegetable harvester and the carrying cart to separate the carrying cart from the fruit and vegetable harvester and leave the carrying cart at the proximal end portion in the inter-row space.

13. A farm facility comprising the fruit and vegetable harvesting apparatus according to claim 7, wherein
the farm facility has a cultivation bed having a plurality of rows,
the fruit and vegetable harvesting apparatus comprises
a fruit and vegetable harvester that harvests fruit and vegetables while traveling in the inter-row space between the rows of the cultivation bed, and
a carrying cart that carries fruit and vegetables harvested by the fruit and vegetable harvester,
a plurality of the carrying carts are respectively provided for each inter-row space or for every several inter-row spaces, and
the farm facility is provided with a passage in each inter-row space through which the fruit and vegetable harvester and the carrying cart can travel.

14. The farm facility according to claim 13, wherein the cultivation bed is provided with an inter-row traveling passage for the fruit and vegetable harvester to move between the inter-row spaces, the inter-row traveling passage being provided further outside a distal end of the inter-row space.
